# EUROPEAN PATENT APPLICATION

(11) **EP 2 209 229 A1**
(43) Date of publication of application: **21.07.2010**
(21) Application number: 09100050.5
(22) Date of filing: 20.01.2009
(51) Int. Cl.: H04B 10/12, H04Q 11/00, H04J 14/02

(54) **Optical PON system and method for data processing**

(71) Applicant: Nokia Siemens Networks OY, 02610 Espoo (FI)
(72) Inventor: Rohde, Harald, 81673, München (DE)
(74) Representative: Bruglachner, Thomas E.

(57) **Abstract**

An optical PON system is provided comprising SOAs in each branch of the PON between the splitter and the ONU, wherein the SOAs are controlled by a central controller. Furthermore, an according method for data processing is suggested.

## Description

The invention relates to an optical PON with security components and to a method implementing security features.

Passive optical networks (PONs) with point to multipoint connection are widely spread in the field and overcome the economic limitations of traditional point-to-point solutions. A typical PON infrastructure consists of an optical line termination (OLT), a passive optical splitter and at least one group of optical network units (ONUs). While conventional PONs have a splitting factor of 32-64, future PONs will have splitting factors of 500 or more. All these PONs distribute downstream traffic from the optical line terminal (OLT) to optical network units (ONUs) in a broadcast manner while the ONUs send upstream data packets multiplexed in time to the OLT.

Such PONs may use a shared fiber infra-structure. This means that potentially all subscribers can listen to the messages sent to any other subscriber. Although encryption is being used for data transmission, potential attackers with either knowledge of the encryption, e.g., a key used, or attackers with sufficient hard- and/or software capability for hacking the encryption may be able to decrypt the messages. While PON systems with such kind of security level may be accepted by private users, companies or governmental users do not or cannot accept distributing their data over a shared medium.

The **problem** to be solved is to overcome the disadvantages set forth above and in particular to provide an efficient solution to allow for a secure data processing via a shared medium.

This problem is solved according to the features of the independent claims. Further embodiments result from the depending claims.

In order to overcome this problem, a method for data processing in an optical network is provided, wherein an optical signal is modulated with a bit pattern thereby modifying the data sent to at least one ONU such that it cannot be reconstructed at this at least one ONU.

Hence, the modulation tampers with the optical signal such that it would not be possible to be reconstructed at the ONU even if a security or encryption key were available. This advantageously enables secure communication as an optical signal that is distributed to many recipients can be tampered with at the distributing stage thereby allowing only the correct recipient to decrypt the message and become aware of the payload data.

In an embodiment, the optical signal is modulated with the bit pattern by temporarily switching off at least one optical amplifier.

In another embodiment, the at least one optical amplifier is temporarily switched off for a duration of at least one bit.

In a further embodiment, the at least one optical amplifier is associated with the at least one ONU, wherein in particular each of the at least one ONUs is associated with one optical amplifier. This allows in addition the individual modulation for the optical signal destined for each ONU.

In a next embodiment, the optical signal provided by a splitter is modulated with the bit pattern for all but one ONU connected to said splitter.

Hence, this one ONU is the correct addressee and should be able to decode the optical signal and become aware of the payload data.

It is noted that said splitter can be any unit distributing an optical signal to several optical components, e.g., receivers.

It is also an embodiment that this all but one ONU requests to enter a private communication mode.

Pursuant to another embodiment, said all but one ONU is determined by analyzing a header of an optical signal.

According to an embodiment, the optical signal is modulated with the bit pattern that is synchronized with a clock of the optical network.

Hence, advantageously, despite the tampering with the optical signal, the clock and the synchronization is maintained. Hence, the ONUs not being the correct recipients still are able to keeping synchronization with the optical signal.

According to another embodiment, the optical signal is modulated with the bit pattern by introducing logical zeros to modify the information such that it cannot be reconstructed at the at least one ONU.

The problem stated above is also solved by an optical component comprising a and/or being associated with a processor unit and/or a hard-wired circuit and/or a logic device and/or an optical device that is arranged such that the method as described herein is executable on said processor unit.

According to an embodiment, said optical component is a or is associated with a controller and/or optical splitter.

According to a further embodiment, said optical component is arranged to control at least one optical amplifier for the at least one ONU.

The problem stated supra is further solved by a communication system comprising the optical component as described herein.

Embodiments of the invention are shown and illustrated in the following figures:
- Fig.1: shows a diagram depicting an overall layout of a security enhanced PON network
- Fig.2: shows an embodiment of a security enhanced SOA
- Fig.3: shows an alternative embodiment for a security enhanced SOA

In order to overcome the security problem, an additional physical security layer may be added to the system between the splitter and the ONUs.
PONs with a high or very high splitting factor have foreseen optical amplifiers collocated at the splitter site already. E.g. if semiconductor amplifiers (SOAs) are used to amplify individual optical access lines between a splitter and an ONU, these SOAs can also be used to switch on or off individual access lines, which is feasible as they can provide fast switching capability.

According to this concept, at any time slot only one single PON line may be activated, while all other lines are disabled. This results in the fact, that no ONU can listen on messages, which are not dedicated for it.

Therefore a new and advantageous mode of operation is proposed, avoiding Burst Mode operation: SOAs controlling not addressed ONUs are not switched off completely, but modulating in such a way that they create sufficient bit patterns to keep the ONUs in a synchronized state. On the other way, not addressed ONUs will not receive enough information to be able to listen successfully to the broadcasted downstream messages.

Only a directly addressed ONU receives the full and unaltered downstream message.

The approach suggested allows an optical network to provide a high level of security for individual lines connecting an OLT with at least on ONU, e.g., via a splitter, thereby in particular neutralizing eavesdropping.

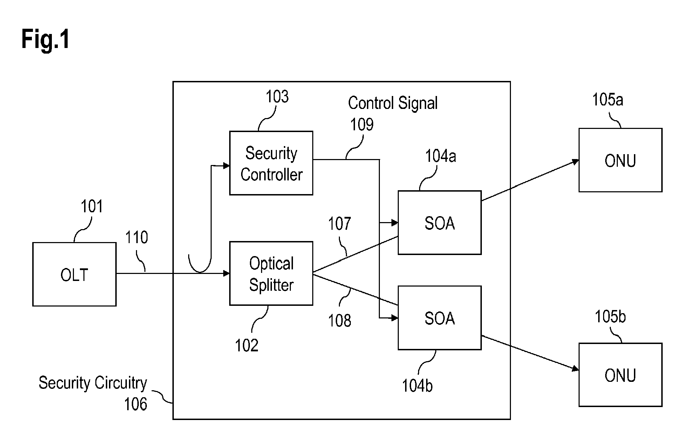

**Fig.1** shows an optical PON architecture comprising an OLT 101, an optical splitter 102 and multiple ONUs 105.

Each optical line between the optical splitter 102, which is connected to an ONU 105 via an SOA 104a and to an ONU 105b via an SOA 104b.

The SOA 104a may optically modify the signal sent from the optical splitter 102 to the ONU 105a and the SOA 104b may optically modify the signal sent from the optical splitter 102 to the ONU 105b.

The SOAs 104a, 104b may be realized as security enhanced SO-As.

For example, an optical signal 110 destined for the ONU 105a is sent from the OLT 101 to the optical splitter 102, which distributes two optical signals 107, 108 towards the ONUs 105a, 105b. In order to avoid the ONU 105b being able to obtain the same optical signal as the addressee ONU 105a, the optical signal 108 is modified (tampered with) by the SOA 104b.

Hence, the SOA 104b may modify the optical signal 108 by modulating it with a bit-pattern that may be synchronized with the clock of the optical network and allows the ONU 105b maintaining a synchronized state. However, due to such modulation the ONU 105b would not receive enough information to become aware of the payload data encapsulated within the optical signal 108 even if the decryption key (of the ONU 105a) was available at the ONU 105b.

On the other hand, the optical signal 107 is not tampered with by the SOA 104a, because the ONU 105a is the correct addressee of the optical signal 110.

One embodiment for tampering modulation provided by the SoA 104b according to the example is that said modulation provides on-off keying and/or zero-bit insertion. The modulation can be adjusted in a way that even forward error correction (FEC) implemented at the ONU 105b is not able to reconstruct the optical signal tampered with by the SOA 104b.

Advantageously, existing ONUs are fully compatible with such an approach, they even remain synchronized in case the signal conveyed by the SOA is modified.

Hence, only the ONU 105a, which shall become aware of the optical signal 110 is able to receive the full and unaltered optical signal and thus the payload data. For such ONU 105a which is actively addressed, the optical signal 107 is simply bypassed and amplified.

The SOAs 104a, 104b are controlled by a security controller 103. The security controller 103 interprets the optical signal 110 from the OLT 101 and provides a control signal 109 to the SOAs 104a, 104b based on the header information of the optical signal 110, which contains the address of an ONU that is intended to receive such optical signal 110. All SOAs other than the one corresponding to the intended addressee receive an information via said control signal 109 to tamper with the optical signal to be conveyed to their respective ONU.

Advantageously, each SOA 104a, 104b may switch light on/off for the duration of at least one bit. In particular, the SOA 104a, 104b may switch light on/off for ONUs that are not the intended addressee such that sufficient zero bits are inserted in the bit stream that even by using a redundant coding in the payload signal (e.g. FEC: forward error correction) the ONU receiving such tampered optical signal cannot retrieve the correct payload data, but the ONU may remain in a synchronized state.

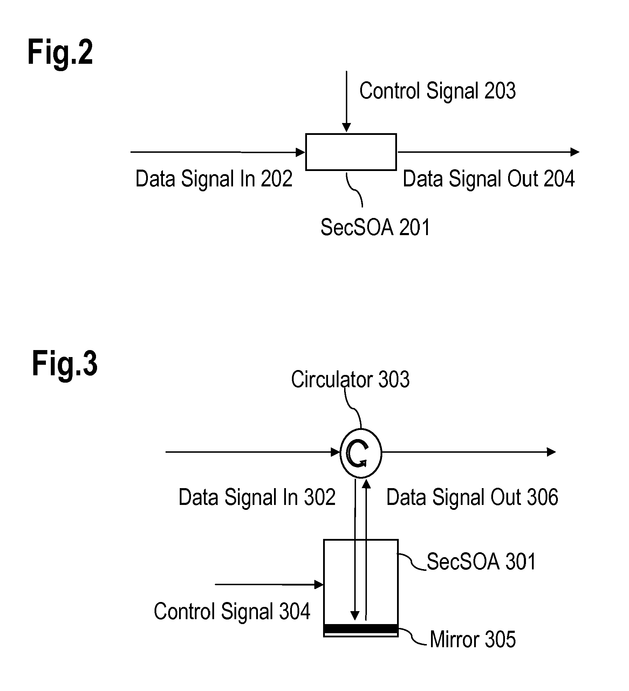

**Fig.2** shows an arrangement for a security enhanced SOA 201, which modifies an optical data input signal 202 according to a control signal 203.

**Fig.3** shows an alternative arrangement for a SOA 301, where an optical data input signal 302 is conveyed via a circulator 303 to the SOA 301, which modifies the optical data input signal 302 via a mirror 305 with a control signal 304 to an output signal 306, which is conveyed via said circulator 303.

### List of Abbreviations:

- FEC: Forward Error Correction
- OLT: Optical Line Terminal
- ONU: Optical Network Unit
- PON: Passive Optical Network
- SecSOA: Security enhanced SOA
- SOA: Semiconductor Optical Amplifier

## Claims

1. A method for data processing in an optical network, wherein an optical signal is modulated with a bit pattern thereby modifying the data sent to at least one ONU such that it cannot be reconstructed at this at least one ONU.

2. The method according to claim 1, wherein the optical signal is modulated with the bit pattern by temporarily switching off at least one optical amplifier.

3. The method according to claim 2, wherein the least one optical amplifier is temporarily switched off for a duration of at least one bit.

4. The method according to any of claims 2 or 3, wherein the at least one optical amplifier is associated with the at least one ONU, wherein in particular each of the at least one ONUs is associated with one optical amplifier.

5. The method according to any of the preceding claims, wherein the optical signal provided by a splitter is modulated with the bit pattern for all but one ONU connected to said splitter.

6. The method according to claim 5, wherein this all but one ONU requests to enter a private communication mode.

7. The method according to any of claims 5 or 6, wherein said all but one ONU is determined by analyzing a header of an optical signal.

8. The method according to any of the preceding claims, wherein the optical signal is modulated with the bit pattern that is synchronized with a clock of the optical network.

9. The method according to any of the preceding claims, wherein the optical signal is modulated with the bit pattern by introducing logical zeros to modify the information such that it cannot be reconstructed at the at least one ONU.

10. An optical component comprising a and/or being associated with a processor unit and/or a hard-wired circuit and/or a logic device and/or an optical device that is arranged such that the method according to any of the preceding claims is executable thereon.

11. The optical component according to claim 10, wherein said optical component is a or is associated with a controller and/or optical splitter.

12. The optical component according to any of claims 10 or 11, wherein said optical component is arranged to control at least one optical amplifier for the at least one ONU.

13. Communication system comprising the optical component according to any of claims 10 to 12.
